# EUROPEAN PATENT APPLICATION

(11) **EP 4 819 334 A1**
(43) Date of publication of application: **07.10.2026**
(21) Application number: 24897320.8
(22) Date of filing: 14.11.2024
(51) Int. Cl.: H01M 50/291, H01M 50/107, H01M 50/213, H01M 50/342, H01M 50/367, H01M 50/507, H01M 50/548

(54) **POWER SUPPLY UNIT CAPABLE OF REPLACING BATTERY CELL**

(30) Priority: 30.11.2023 JP 2023203364
(71) Applicant: Panasonic Intellectual Property Management Co., Ltd., Kadoma-shi, Osaka 571-0057 (JP)
(72) Inventor: FUKUDA Shinsuke, Kadoma-shi, Osaka 571-0057 (JP)
(74) Representative: Eisenführ Speiser
(86) International application number: PCT/JP2024/040492
(87) International publication number: WO 2025/115633

(57) **Abstract**

A power supply unit for replaceable battery cells, the power supply unit including: a plurality of battery cells each including an outer peripheral groove on one end side; a battery holder, made of an insulating material, to position a battery cell at a fixed position; and a spring contact elastically pressed against and electrically connected to positive and negative electrodes of the battery cell, in which the spring contact includes a first spring contact electrically connected to an end-face electrode that is a first electrode of the battery cell, and a second spring contact electrically connected to a second electrode of the battery cell, the battery holder includes a detachable recess and a fitting claw, the first spring contact is electrically connected to the end-face electrode of the battery cell inserted into the detachable recess, and the fitting claw is engaged with the outer peripheral groove and the battery cell is removably disposed at a fixed position in the detachable recess.

## Description

### TECHNICAL FIELD

The present disclosure relates to a power supply unit including a plurality of battery cells, the power supply unit having a "reusable structure" in which the battery cells can be replaced.

### BACKGROUND ART

In the power supply unit, a plurality of battery cells can be connected in series or in parallel, and an output voltage, an output current, a charge/discharge capacity, and the like can be set to optimum values for the application. For example, in the power supply unit, the plurality of battery cells can be connected in series to increase the output voltage, the plurality of battery cells can be connected in parallel to increase the output current, and the charge/discharge capacity can be set to an optimum value by the number of battery cells connected in series or in parallel. A power supply unit including a plurality of battery cells includes a battery holder in which the battery cells are disposed at fixed positions. The battery holder is formed by molding an insulating material such as plastic. This battery holder is formed into a shape in which the battery cells are disposed at fixed positions in a fitting structure. In the battery holder, adjacent battery cells are disposed in parallel, end-face electrodes at both ends are disposed on the same plane, and electrode windows are provided to dispose the end-face electrodes of the battery cells on the same plane and expose the end-face electrodes. In the battery holder, a lead plate is disposed at a position where the exposure window is closed, and the lead plate is welded to the end-face electrode to connect adjacent battery cells in series or in parallel. A power supply unit in which a plurality of battery cells are disposed at fixed positions in a battery holder has been developed (see PTL 1).

### Citation List

### Patent Literature

PTL 1: International Patent Publication No. 2012/147134

### SUMMARY OF THE INVENTION

In the power supply unit of PTL 1, a plurality of cylindrical batteries are disposed at fixed positions via a fixing plate. The fixing plate is provided with an opening into which an end of the cylindrical battery is inserted and disposed at a fixed position. The battery cell is disposed at a fixed position with an end inserted into the opening of the fixing plate, and a connection lead is welded to an end-face electrode exposed from the opening to be electrode-connected in series or in parallel. Furthermore, the fixing plate is provided with a claw to be locked to the cylindrical battery inserted into the opening. The claw is engaged with a groove of the cylindrical battery to suppress positional displacement of the battery cell in the longitudinal direction, and the frictional force acting between the claw and the groove of the battery cell suppresses rotation of the battery cell around the axis.

In the power supply unit described above, the opening is provided in the fixing plate corresponding to the battery holder of the present invention, the battery cells are guided to the opening, and the plurality of battery cells are disposed in parallel at fixed positions. The plurality of rows of batteries disposed at fixed positions by the fixing plate are electrode-connected in series or in parallel via connection leads welded to exposed portions of the fixing plate.

The above power supply unit has a problem that, although it allows an end of the battery cell to be inserted into the opening of the fixing plate and be disposed at a fixed position, replacement of a specific battery cell is extremely difficult. This problem causes the life of the power supply unit including a large number of battery cells to be substantially shortened. This is because while a power supply unit including a plurality of battery cells is charged and discharged and the battery cells are degraded over time, the battery cells are degraded in an unbalanced manner without being uniformly degraded, and a specific battery cell will be degraded and be determined to be a non-standard battery cell. In addition, also in the assembly process of the power supply unit, there is a possibility that a specific battery cell becomes a non-standard battery cell that does not satisfy a specified value for some reason. A power supply unit in which all battery cells are not degraded uniformly and a specific battery cell is degraded can be repaired to a usable state by replacing the degraded non-standard battery cell, thereby extending the substantial life. Therefore, a power supply unit including a large number of battery cells can adopt the reusable structure in which the degraded non-standard battery cells are replaced to make the power supply unit reusable. This extends the substantial life of the battery cells and allows all of the battery cells to be utilized effectively.

The power supply unit of PTL 1 cannot solve the problem that it takes time and effort to replace, particularly remove, and separate non-standard battery cells. This is because the end-face electrode of the battery cell is welded to the connection lead, and the connection lead cannot be easily separated.

The present invention has been developed to solve the above problem, and one object of the present invention is to provide a power supply unit having a reusable structure in which a non-standard battery cell can be easily removed and replaced.

A power supply unit according to an aspect of the present disclosure is a power supply unit for replaceable battery cells, the power supply unit including: a plurality of battery cells each including an outer peripheral groove on one end side; a battery holder, made of an insulating material, to position a battery cell at a fixed position, the battery cell being one of the plurality of battery cells; and a spring contact elastically pressed against and electrically connected to positive and negative electrodes of the battery cell, wherein: in the positive and negative electrodes of the battery cell, one of the positive and negative electrodes is a first electrode, and another of the positive and negative electrodes is a second electrode, and the first electrode is an end-face electrode provided on an end face of the battery cell; the spring contact includes a first spring contact electrically connected to the end-face electrode that is the first electrode of the battery cell, and a second spring contact electrically connected to the second electrode of the battery cell; the battery holder includes a detachable recess into which an end of the battery cell is removably inserted, and a fitting claw that engages with the outer peripheral groove of the battery cell, which is guided by the detachable recess, to removably lock the battery cell; the first spring contact is disposed in a central portion of a bottom surface of the detachable recess, and electrically connected to the end-face electrode that is the first electrode of the battery cell that is inserted into the detachable recess; and, in the battery holder, the fitting claw is engaged with the outer peripheral groove of the battery cell, and the battery cell is removably disposed at a fixed position in the detachable recess.

The power supply unit described above has a feature that a non-standard battery cell can be easily removed and replaced.

### BRIEF DESCRIPTION OF THE DRAWINGS

Fig. 1 is a schematic exploded perspective view of a power supply unit according to an exemplary embodiment of the present disclosure.
Fig. 2 is a cross-sectional schematic view illustrating a state in which an end of a battery cell is inserted into a battery holder.
Fig. 3 is a schematic perspective view of the battery holder.
Fig. 4 is a schematic exploded perspective view of the battery holder of Fig. 3.
Fig. 5 is a schematic cross-sectional view taken along line V-V of Fig. 3 in a state where a battery cell is inserted.
Fig. 6 is a schematic cross-sectional view taken along line VI-VI in Fig. 3 in a state where a battery cell is inserted.
Fig. 7 is a schematic exploded perspective view illustrating one example of connection of spring contacts.
Fig. 8 is a schematic exploded perspective view illustrating another example of connection of spring contacts.
Fig. 9 is a schematic exploded perspective view illustrating another example of connection of spring contacts.
Fig. 10 is a cross-sectional schematic view illustrating another example including a sub battery holder.

### DESCRIPTION OF EMBODIMENT

The present invention will now be described in detail with reference to drawings. Note that, in the following description, terms (for example, "top", "bottom", and other terms including those terms) indicating specific directions or positions are used as necessary; however, the use of those terms is for facilitating the understanding of the invention with reference to the drawings, and the technical scope of the present invention is not limited by the meanings of the terms. Portions denoted by the same reference numerals in a plurality of drawings indicate the identical or equivalent portions or members.

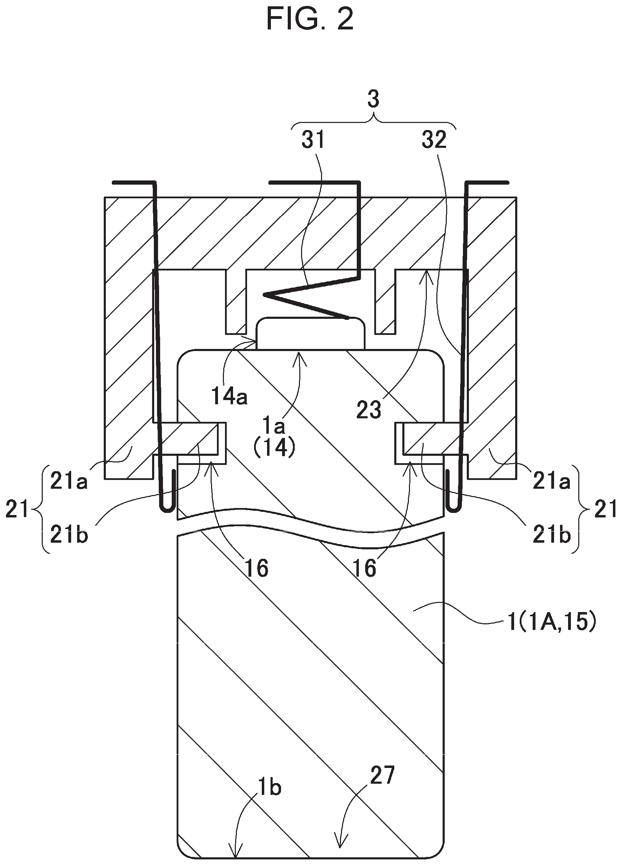

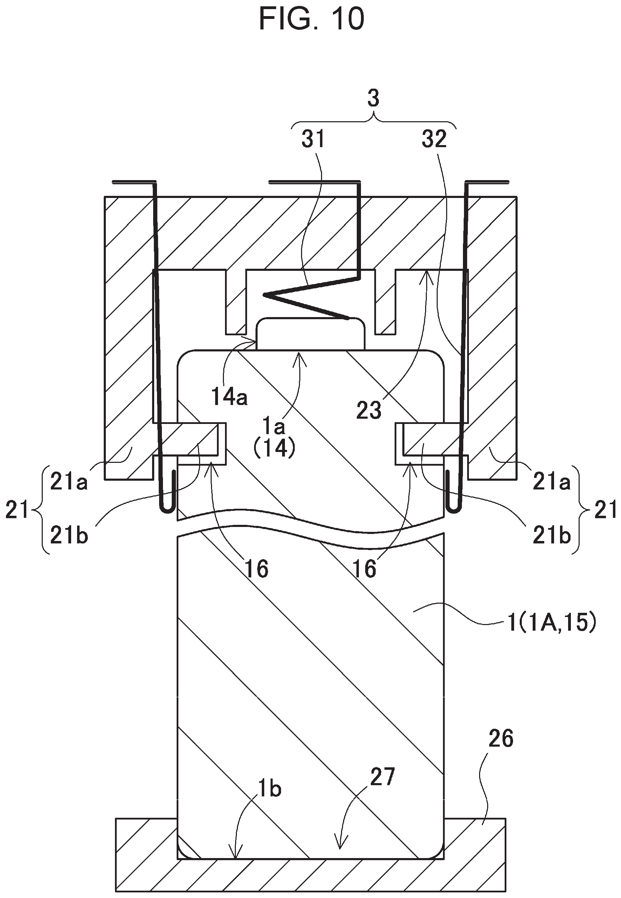

Moreover, exemplary embodiments described below illustrate specific examples of the technical idea of the present invention, and the present invention is not limited to the exemplary embodiments below. Furthermore, unless otherwise specified, dimensions, materials, shapes, relative arrangements, and the like of the configuration components described below are not intended to limit the scope of the present invention only to them, but are intended to be illustrative. Furthermore, the contents described in one exemplary embodiment or example are also applicable to other exemplary embodiments and examples. In addition, sizes, positional relationships, and the like of the members in each drawing are sometimes exaggerated for the purpose of facilitating the understanding of the description. For example, Figs. 2 and 10 are schematic views for facilitating the description, and the size, scale, positional relationship, and the like of the members are not accurate.

A power supply unit according to one implementation mode of the present disclosure is a power supply unit for replaceable battery cells, the power supply unit including: a plurality of battery cells each including an outer peripheral groove on one end side; a battery holder, made of an insulating material, to position a battery cell at a fixed position, the battery cell being one of the plurality of battery cells; and a spring contact elastically pressed against and electrically connected to positive and negative electrodes of the battery cell. In the positive and negative electrodes of the battery cell, one of the positive and negative electrodes is a first electrode, and another of the positive and negative electrodes is a second electrode, and the first electrode is an end-face electrode provided on an end face of the battery cell. The spring contact includes a first spring contact electrically connected to the end-face electrode that is the first electrode of the battery cell, and a second spring contact electrically connected to the second electrode of the battery cell. The battery holder includes a detachable recess into which an end of the battery cell is removably inserted, and a fitting claw that engages with the outer peripheral groove of the battery cell, which is guided by the detachable recess, to removably lock the battery cell. The first spring contact is disposed in a central portion of a bottom surface of the detachable recess, and electrically connected to the end-face electrode that is the first electrode of the battery cell that is inserted into the detachable recess. In the battery holder, the fitting claw is engaged with the outer peripheral groove of the battery cell, and the battery cell is removably disposed at a fixed position in the detachable recess.

In the power supply unit described above, a degraded battery cell or a non-standard battery cell can be easily removed and replaced. This is because the above power supply unit has a reusable structure in which an end of the electrical connection is guided to the detachable recess of the battery holder and disposed at a fixed position, the fitting claw is locked to the outer peripheral groove of the battery cell into which the end is inserted to reliably prevent the positional displacement of the battery cell in the use environment, and the electrical connection with the electrode of the battery cell is established via the spring contact.

In the power supply unit described above, in the process of taking out a degraded or non-standard battery cell and replacing it in another power supply unit to be reused, that is, in the reuse process, the battery cell can be taken out of power supply unit. This is because, unlike the conventional power supply unit, it is not necessary to break the portion of the battery cell welded to the electrode and forcibly pull off the lead plate, and since the battery cell has the end inserted into the detachable recess of the battery holder and the rear end exposed, the exposed rear end of the battery holder can be grasped and easily pulled and taken out.

In the power supply unit according to another implementation mode of the present disclosure, the second spring contact may elastically protrude on an inner surface of the detachable recess, and may be elastically pressed against and electrically connected to the second electrode.

The power supply unit described above has a feature that an end of the battery cell can be inserted into the detachable recess of the battery holder to be reliably electrically connected to both the first electrode and the second electrode that are positive and negative electrodes of the battery cell. Furthermore, in the above power supply unit, the cooling plate can be directly disposed on the rear end faces of the plurality of battery cells on the opposite side of the first electrode without any inclusion, and the rear end faces of the plurality of battery cells can be disposed on the same plane. Therefore, the battery cells can be efficiently and uniformly cooled with a simple structure in which the cooling plate is disposed on the rear end face of the battery cells in a thermally coupled state.

In the power supply unit according to another implementation mode of the present disclosure, the fitting claw of the battery holder may be elastically deformed to lock the battery cell in the detachable recess. The power supply unit described above has a feature that the fitting claw can be elastically deformed to smoothly insert the battery cell into the detachable recess and dispose the battery cell at a fixed position.

A power supply unit according to another implementation mode of the present disclosure may include an exterior case that houses the plurality of battery cells. The exterior case may contain a battery block including the plurality of battery cells , the battery block may include a plurality of assembled batteries, and each of the plurality of assembled batteries may be configured by coupling the plurality of battery cells in an integrated structure. The power supply unit described above has a feature that the number of battery cells incorporated in the exterior case can be adjusted by producing a large number of assembled batteries in which a specific number of battery cells are coupled in an integrated structure and changing the number of assembled batteries housed in the exterior case. This is because the number of battery cells housed in the exterior case can be freely changed by the number of coupled assembled batteries including a specific number of battery cells.

In a power supply unit according to another implementation mode of the present disclosure, each of the plurality of battery cells may be a cylindrical battery. The power supply unit described above has a feature that the battery cell can be smoothly guided to the detachable recess while being rotated, and the battery cell locked to the fitting claw can be pulled out from the detachable recess while being rotated.

In a power supply unit according to another implementation mode of the present disclosure, each of the plurality of assembled batteries may include a holder cover, on a surface of which a plurality of battery holders are arranged and coupled with each other, the battery holder being one of the plurality battery holders, the holder cover may include a connection lead on the surface, and the connection lead may be connected to the spring contact coupled to the plurality of battery holders adjacently arranged, and may connect the plurality of battery cells adjacently arranged in series or/and in parallel. The power supply unit described above has a feature that the battery cells of the battery holder can be connected in series or/and in parallel by the connection lead of the holder cover.

A power supply unit according to another implementation mode of the present disclosure may include a sub battery holder into which respective ends of adjacent battery cells of the plurality of battery cells are inserted, to position the adjacent battery cells at fixed positions. The sub battery holder may include a sub detachable recess into which one end of the battery cell is detachably inserted, another end of the battery cell may be inserted into the detachable recess, the one end of the battery cell may be inserted into the sub detachable recess, and the adjacent battery cells may be arranged in parallel at fixed positions. In the power supply unit described above, the battery holder and the sub battery holder are fastened with a screw, a spacer, or the like, and the battery holder and the sub battery holder are fixed and fastened at a fixed distance, so that both ends of the battery cell are clamped, the first spring contact can be stably pressed, and the battery cell can be stably disposed at a fixed position.

A power supply unit according to another implementation mode of the present disclosure may include a circuit board mounted with a protection circuit electrically connected via the first spring contact and the second spring contact to the first electrode and the second electrode of the battery cell. The power supply unit described above has a feature that the protection circuit of the circuit board is connected to the first electrode and the second electrode of the battery cell at the first spring contact and the second spring contact, and charge and discharge can be controlled while detecting the electrical characteristics of the battery cell by the protection circuit, thereby achieving high safety.

In a power supply unit according to another implementation mode of the present disclosure, the battery cell may include a valve opening mechanism that opens a valve and ejects a discharge material when an internal pressure exceeds a set pressure, and the battery holder may include a discharge opening that communicates with the inside and outside of the detachable recess, and allow the discharge material ejected from the valve opening mechanism to pass therethrough. The power supply unit described above has a feature that a high-temperature and high-pressure discharge material released into the detachable recess by thermal runaway of the battery cells can be smoothly discharged from the discharge opening communicating with the inside and outside of the detachable recess.

### (Exemplary embodiment 1)

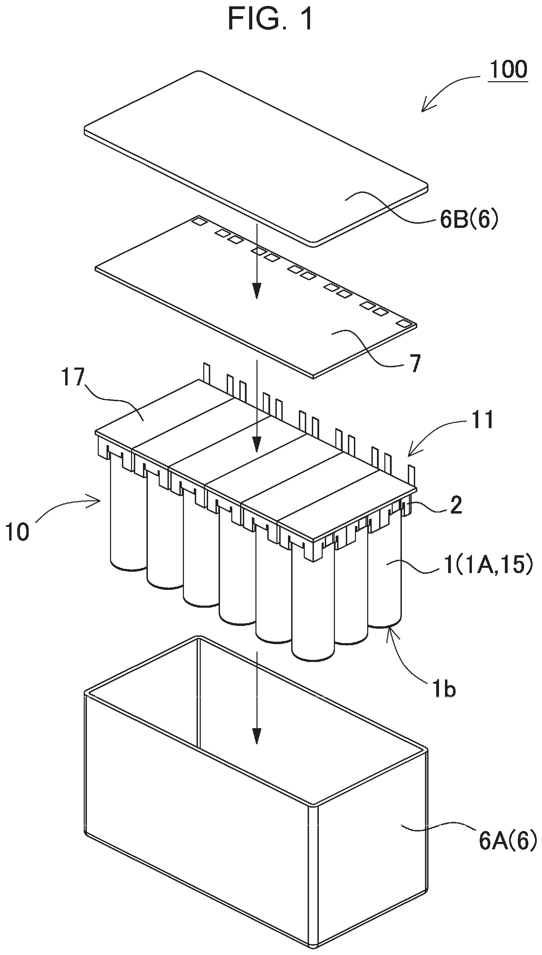

In power supply unit 100 illustrated in the exploded perspective view of Fig. 1, a plurality of battery cells 1 and circuit board 7 connected to battery cells 1 are disposed in exterior case 6. In power supply unit 100 of Fig. 1, a plurality of battery cells 1 (three battery cells 1 in Fig. 1) are coupled to form assembled battery 10, and a plurality of assembled batteries 10 (six assembled batteries 10 in Fig. 1) are coupled to form battery block 11. Assembled batteries 10 are housed in exterior case 6 in the form of battery block 11. Power supply unit 100 having this structure has a feature that the overall number of battery cells 1 can be adjusted without changing the number of battery cells 1 included in assembled battery 10, that is, by mass-producing a specific number of assembled batteries 10 and adjusting the number of assembled batteries 10 included in battery block 11. Note, however, that power supply unit 100 of the present invention is not necessarily limited to the structure in which battery cells 1 are coupled to form assembled battery 10, and a plurality of assembled batteries 10 are coupled to be disposed in exterior case 6 in the state of battery block 11. For example, a structure in which a plurality of battery cells 1 are coupled to be disposed in exterior case 6 as battery block 11 may be adopted.

A plurality of battery cells 1 are disposed in exterior case 6. The present disclosure does not specify a shape, a size, a configuration, and a structure of exterior case 6, but for example, exterior case 6 in Fig. 1 closes an upper opening of box-shaped lower case 6A with upper lid 6B, and disposes the plurality of battery cells 1 inside. Exterior case 6 can have a holder that holds battery cell 1 (including battery block 11 or assembled battery 10) at a predetermined position and in a predetermined orientation.

Battery cells 1 included in battery block 11 are connected to circuit board 7, and charge and discharge can be controlled by a protection circuit (not illustrated) mounted on circuit board 7. This circuit board 7 can control charge and discharge by connecting the protection circuit to battery cell 1 and detecting a voltage, a current, or the like of battery cell 1.

### (Assembled battery 10)

The plurality of assembled batteries 10 are coupled to form battery block 11 incorporated in exterior case 6. In assembled battery 10, battery holder 2 is connected to holder cover 17, and the plurality of battery cells 1 are disposed in parallel via battery holder 2. In battery holder 2, battery cell 1 is disposed at a fixed position. In assembled battery 10 of Fig. 1, three battery cells 1 are coupled to holder cover 17 via battery holder 2. In battery block 11, holder covers 17 of assembled batteries 10 are disposed in parallel on the same plane. In battery block 11 of Fig. 1, holder covers 17 are arranged in six rows, and a total of 18 battery cells 1 are arranged in parallel.

### (Battery cell 1)

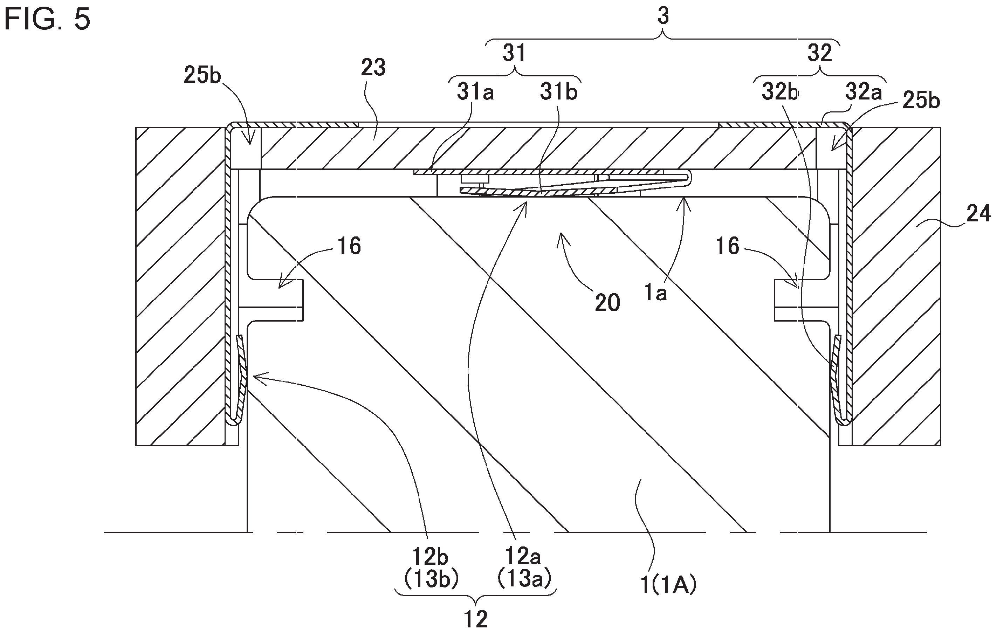

Battery cell 1 has positive and negative electrodes 12 on an exterior can, the exterior can housing an electrode assembly and filled with an electrolyte. Of positive and negative electrodes 12, one electrode 12 is first electrode 12a, and the other electrode 12 is second electrode 12b. In battery cell 1 of Fig. 2, first electrode 12a is provided on one end surface of battery cell 1 to form end-face electrode 13a, and second electrode 12b is provided on a portion other than end-face electrode 13a to form front-face electrode 13b. The cross-sectional schematic view of Fig. 2 illustrates a state in which one end of battery cell 1 on the end-face electrode 13a side is inserted into battery holder 2. In battery cell 1 of Fig. 2, an opening of metal cylinder 15 having a closed bottom is closed by sealing plate 14 having end-face electrode 13a to form an exterior can. In the exterior can, the opening of metal cylinder 15 is closed by sealing plate 14 provided with end-face electrode 13a, and an electrode assembly formed of positive and negative electrode plates is disposed inside metal cylinder 15. Sealing plate 14 closes the opening of metal cylinder 15 via an insulating material (not illustrated). Sealing plate 14 and metal cylinder 15 are coupled in an insulated state, and sealing plate 14 in Fig. 2 is provided with end-face electrode 13a, while metal cylinder 15 is provided with front-face electrode 13b. End-face electrode 13a and front-face electrode 13b are positive and negative electrodes 12 of battery cell 1. For example, end-face electrode 13a can be a positive electrode, front-face electrode 13b can be a negative electrode, or end-face electrode 13a can be a negative electrode, and front-face electrode 13b can be a positive electrode. End-face electrode 13a can be a protruding protrusion electrode or a recess electrode, or a planar electrode without unevenness or with less unevenness. In metal cylinder 15, a portion other than end-face electrode 13a, such as a bottom surface or an outer peripheral surface (side surface) of metal cylinder 15 can be used as front-face electrode 13b. In battery cell 1, front-face electrode 13b can be provided above and/or below outer peripheral groove 16, or in outer peripheral groove 16. Front-face electrode 13b can be provided between outer peripheral groove 16 and an end face (first end face 1a) on the end-face electrode 13a side, or between outer peripheral groove 16 and an end face (second end face 1b) on the opposite side of end-face electrode 13a. In battery cell 1 of Fig. 5, front-face electrode 13b is provided between outer peripheral groove 16 and second end face 1b.

Sealing plate 14 closes the opening of metal cylinder 15 by a caulking structure. In this battery cell 1, outer peripheral groove 16 is provided along or close to the coupling portion between sealing plate 14 and metal cylinder 15. Outer peripheral groove 16 is provided by coupling sealing plate 14 and metal cylinder 15 by a caulking structure and extending the portion in the circumferential direction along or close to the coupling portion. Outer peripheral groove 16 has a stepped portion in the inner direction (direction of central axis) of metal cylinder 15. For example, in battery cell 1, after the integrated structure of the tray-shaped gasket and sealing plate 14 is disposed in the stepped portion, the gasket and metal cylinder 15 are caulked and sealed. A groove and a step for pressing and caulking metal cylinder 15 can be used as outer peripheral groove 16. In this caulking, sealing plate 14 can seal metal cylinder 15, and outer peripheral groove 16 can be formed in battery cell 1. In this battery cell 1, it is not necessary to form outer peripheral groove 16 in a separate process, which saves process, labor, and time, and contributes to cost reduction.

In power supply unit 100 of Fig. 1, battery cell 1 is cylindrical battery 1A, but the present disclosure does not specify battery cell 1 as cylindrical battery 1A, and battery cell 1 may be a prismatic battery. The prismatic battery can be provided with an outer peripheral groove. Furthermore, battery cell 1 is, for example, a non-aqueous electrolyte secondary battery such as a lithium ion secondary battery, but the present invention does not specify the type of battery cell 1, and all secondary batteries that are currently used or will be developed, such as all-solid-state batteries can also be used.

### (Battery holder 2)

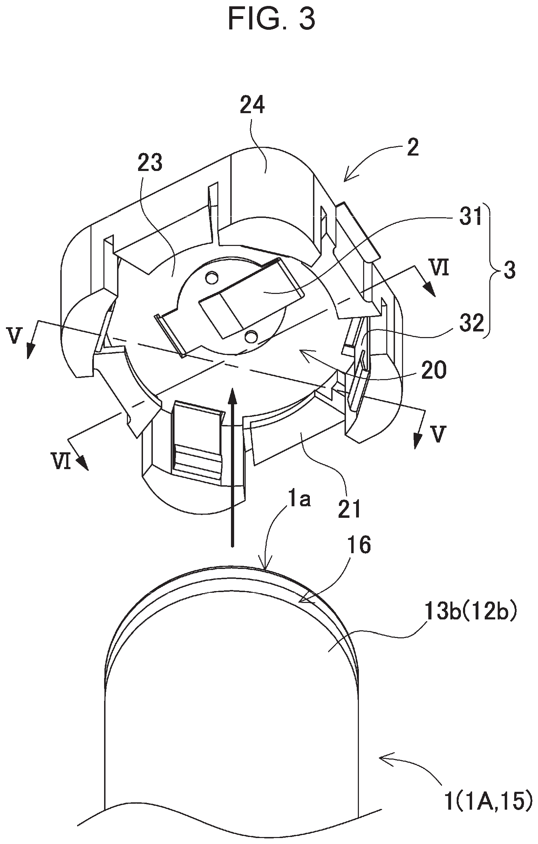

Battery holder 2 disposes battery cell 1 at a fixed position. Battery holder 2 is provided with detachable recess 20 in which battery cell 1 is disposed at a fixed position. Battery holder 2 allows battery cell 1 to be disposed at a fixed position by inserting an end of battery cell 1 into detachable recess 20. The end of battery cell 1 can be pulled out from detachable recess 20. Battery holder 2 can be formed and manufactured from a single material or a plurality of materials. Battery holder 2 can be formed by a hard molding material of an insulating material, such as a molded body of a thermoplastic plastic like polycarbonate. Battery holder 2 can be molded from partially different materials, can be molded in two colors, can be insert-molded, and can be formed from a plurality of members. In battery holder 2, for example, whole battery holder 2 including fitting claw 21 can be made of a flexible material such as polycarbonate, while a portion requiring fire resistance and heat resistance, such as a portion near battery cell 1 (valve opening mechanism 14a) of detachable recess 20, can be made of a material excellent in fire resistance and heat resistance, and be made of another member, such as mica. This battery holder 2 can adjust the elastic pressing force of fitting claw 21, and can have fire resistance and heat resistance during thermal runaway. Battery holder 2 can dispose one or a plurality of battery cells 1 at fixed positions. For example, Figs. 3 to 6 disclose battery holder 2 in which one battery cell 1 is disposed at a fixed position. Battery holder 2 in which a plurality of battery cells 1 are disposed at fixed positions has a plurality of detachable recesses 20. Battery holder 2 having the plurality of detachable recesses 20 can be molded and formed into an integrated structure, and the plurality of battery holders 2 can be coupled together.

In power supply unit 100 of Fig. 1, battery holders 2 are disposed adjacent to each other, and the plurality of battery cells 1 are disposed in parallel. The plurality of battery cells 1 can be disposed in parallel via battery holder 2 disposed at a fixed position in exterior case 6. In power supply unit 100, a plurality of battery cells 1 can be disposed in a row or a plurality of rows in parallel via battery holder 2 in exterior case 6. In power supply unit 100, the end surfaces of the plurality of battery cells 1 can be disposed on the same or substantially the same plane via battery holder 2, or can be disposed on different planes. Note, however, that the present invention does not specify the arrangement of battery cells 1, and the plurality of battery cells 1 can be arranged in various arrangements and orientations.

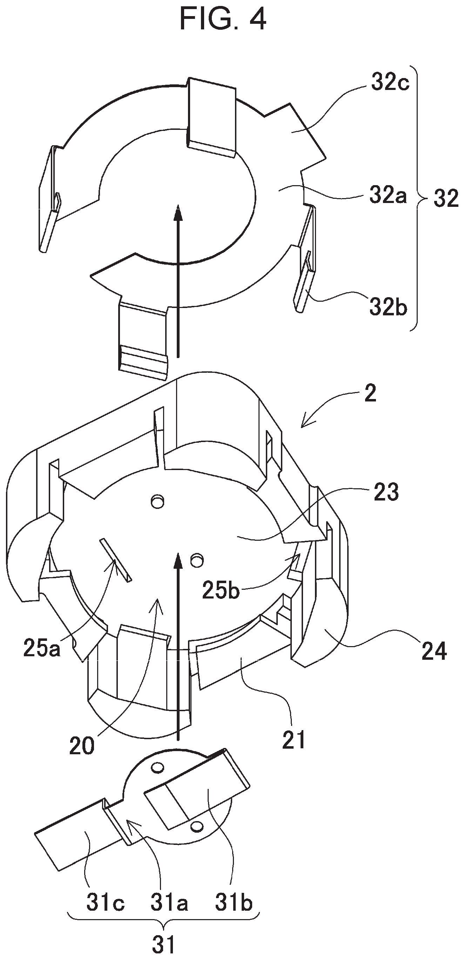

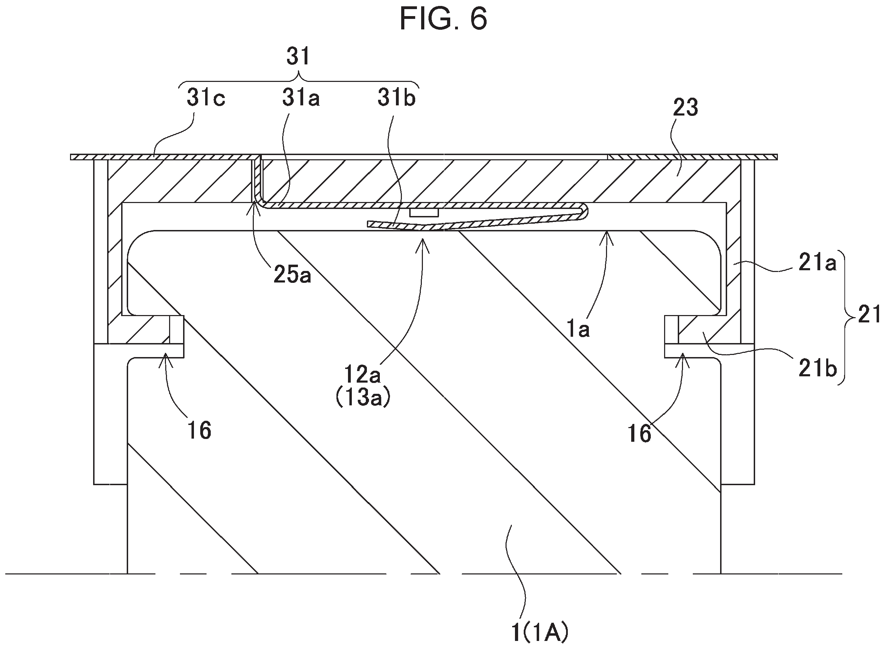

Battery holder 2 includes detachable recess 20 into which one end of battery cell 1 is inserted and disposed at a fixed position, and fitting claw 21 that holds battery cell 1 in detachable recess 20. Detachable recess 20 and fitting claw 21 allow battery cell 1 to be disposed in detachable recess 20 in a state where battery cell 1 can be pulled out. Fig. 3 illustrates a state in which an end of battery cell 1 is inserted into battery holder 2, Fig. 4 illustrates an exploded perspective view of battery holder 2, Fig. 5 illustrates a schematic cross-sectional view taken along line V-V (between opposing holding walls 24) in Fig. 3 in a state where the end (first end face 1a) of battery cell 1 is inserted, and Fig. 6 illustrates a schematic cross-sectional view taken along line VI-VI (between opposing fitting claws 21) in Fig. 3 in a state where first end face 1a of battery cell 1 is inserted. In battery holder 2 illustrated in Figs. 3 to 10, a plurality of holding walls 24 and a plurality of fitting claws 21 are provided on a peripheral edge of bottom plate 23. In battery holder 2 of Fig. 3, fitting claw 21 is disposed between adjacent holding walls 24. Holding walls 24 in the drawing are disposed diagonally at four corners of bottom plate 23 to hold battery cell 1 in a predetermined position. Fitting claws 21 in the drawing face central portions of sides of the peripheral edge of bottom plate 23, and are locked to outer peripheral groove 16 of battery cell 1 to hold battery cell 1 at a fixed position. This battery holder 2 can be formed by molding plastic into a shape in which bottom plate 23, holding wall 24, and fitting claw 21 have an integrated structure. In battery holder 2 in this drawing, holding walls 24 extending vertically are disposed at four corners of detachable recess 20, and the inside of holding walls 24 is used as detachable recess 20 for guiding battery cell 1.

The inside of holding wall 24 is used as detachable recess 20, and battery cell 1 is inserted into detachable recess 20 and disposed at a fixed position without positional displacement. The height of holding wall 24 is determined within an appropriate range in which battery cell 1 can be disposed at a fixed position according to the size of battery cell 1. The height of holding wall 24 is, for example, 5 mm or more, preferably 10 mm or more, and more preferably 15 mm or more with respect to battery cell 1 having a length of 70 mm, so that battery cell 1 disposed inside can be held from all sides without positional displacement. Holding wall 24 can be raised to stably dispose battery cell 1 at a fixed position. By lowering holding wall 24, an area where battery cell 1 is exposed can be enlarged, and cooling performance can be improved. Holding wall 24 has an inner surface formed along an outer peripheral surface of battery cell 1, and can stably hold battery cell 1 in detachable recess 20. The outer shape of the holding wall 24 may be, for example, a shape in which a corner portion is chamfered to a curved surface as illustrated in the perspective view of Fig. 3, or may be an orthogonal surface.

Bottom plate 23 can have, for example, a plate shape in which both the inner surface and the outer surface are planar, and can have a quadrangular outer shape or a chamfered shape with curved corners (Figs. 3, 8, and 9). Battery holder 2 in which bottom plate 23 has a quadrangular outer shape or the like has a feature that battery cells 1 can be arranged in multiple stages and multiple rows by being disposed in a grid pattern with no gaps in vertical and horizontal directions.

Battery holder 2 can have one or more fitting claws 21. Fitting claws 21 in Fig. 3 are disposed between adjacent holding walls 24 to hold battery cell 1 disposed inside holding walls 24 in a fixed position. Fitting claw 21 is provided with locking protrusion 21b that is locked to outer peripheral groove 16 of battery cell 1 guided to the inside of holding wall 24. Locking protrusion 21b is disposed at a position protruding inward at a tip or near a tip of fitting claw 21, and is locked to outer peripheral groove 16 of battery cell 1 guided to detachable recess 20. In battery holder 2, fitting claw 21 is locked to outer peripheral groove 16, and inserted battery cell 1 can be disposed and held at a fixed position. The shape, size, number, and the like of fitting claw 21 are not specified, but are adapted to the depth, width, step, and the like of outer peripheral groove 16 to be locked to outer peripheral groove 16. It is also assumed that the shape, size, number, and the like of fitting claw 21 are adapted to the outer shape of battery cell 1 (outer peripheral groove 16). Since locking protrusion 21b has a constant length in the extending direction (outer peripheral direction) of outer peripheral groove 16, locking protrusion 21b is locked to outer peripheral groove 16, and can reliably dispose and hold battery cell 1 at a fixed position. In the case of cylindrical battery 1A, locking protrusion 21b preferably has an arc shape. The plurality of locking protrusions 21b can be locked to outer peripheral groove 16 at different separated positions to reliably dispose and hold battery cell 1 at a fixed position. In addition, a pair of locking protrusions 21b disposed at opposite positions can each protrude inward and be locked to and clamp outer peripheral groove 16 from both sides. A plurality of pairs (two pairs in Fig. 3) of opposing locking protrusions 21b enable locking and clamping along a plurality of axes (two axes in Fig. 3), and by disposing locking protrusions 21b at an interval of a central angle of 90 degrees, opposing pairs of locking protrusions 21b can be disposed in a cross shape for locking and clamping, so that battery cell 1 can be disposed and held reliably. In power supply unit 100, each of or a combination of holding wall 24, fitting claw 21, and spring contact 3, which will be described later, can dispose and hold battery cell 1 at a fixed position. While detachable recess 20 and fitting claw 21 hold battery cell 1 at the insertion position of detachable recess 20, fitting claw 21 is disposed in detachable recess 20 so that non-standard battery cell 1 can be pulled and pulled out when replacing non-standard battery cell 1.

Battery holder 2 in which battery cell 1 of cylindrical battery 1A is disposed at a fixed position can have a structure in which cylindrical battery 1A can be disposed in detachable recess 20 in a rotatable state. This battery holder 2 has a feature that cylindrical battery 1A of battery cell 1 can be easily pulled out by rotating when non-standard battery cell 1 is pulled out from detachable recess 20. Note, however, that detachable recess 20 does not necessarily need to rotatably guide battery cell 1. This is because non-standard battery cell 1 can be pulled without rotating to be pulled out from detachable recess 20.

Fitting claw 21 can have elastic arm 21a that is elastically deformed. This fitting claw 21 has a feature that when non-standard battery cell 1 is pulled out, fitting claw 21 can be elastically deformed to move locking protrusion 21b to the outside of outer peripheral groove 16 and facilitate the pullout. Note, however, that fitting claw 21 is not necessarily elastically deformable. This is because non-standard battery cell 1 can be pulled strongly in the pull-out direction to move locking protrusion 21b to the outside of outer peripheral groove 16 and pull non-standard battery cell 1 out from detachable recess 20. Battery cell 1 of cylindrical battery 1A can be pulled in the pull-out direction while being rotated to be easily pulled out from detachable recess 20. Battery cell 1 can also be pulled out by moving locking protrusion 21b to the outside of outer peripheral groove 16 to obtain a non-locked state using a removal dedicated jig for battery cell 1.

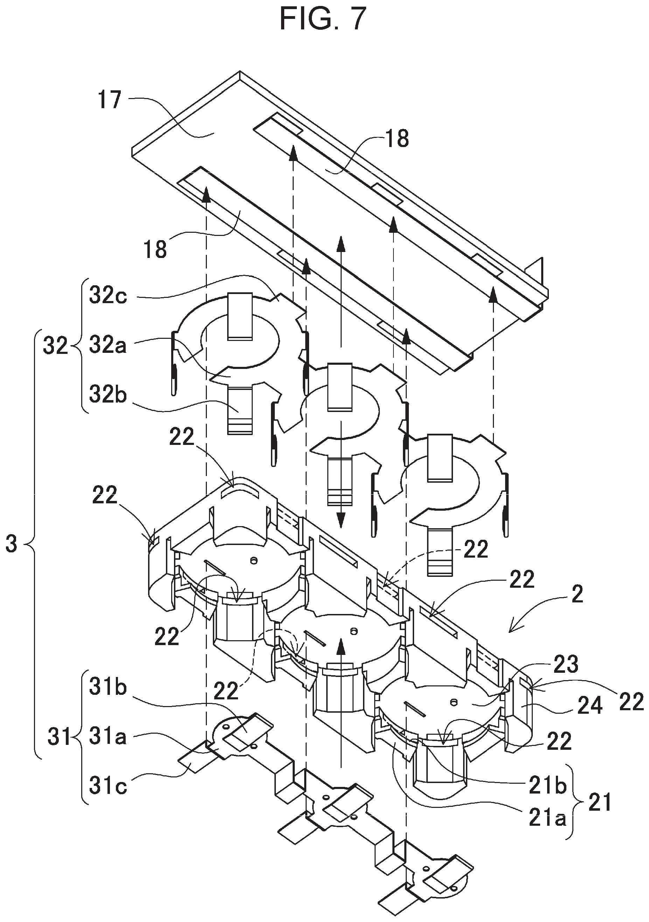

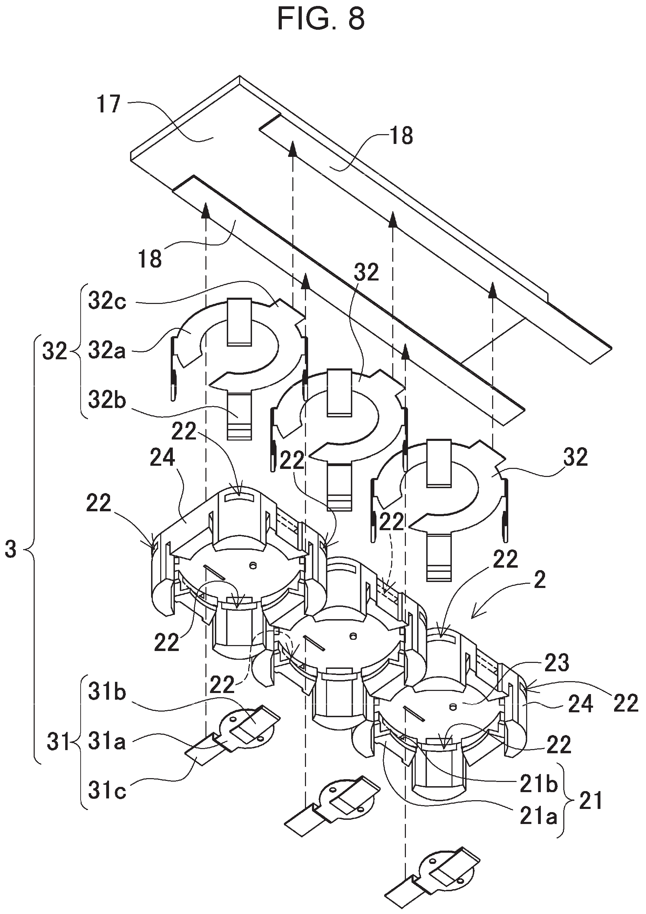

Battery holder 2 can be provided with one or more discharge openings 22. Discharge opening 22 communicates with the inside and the outside of detachable recess 20, and allows the discharge material ejected from valve opening mechanism 14a of battery cell 1 to pass therethrough and be discharged to the outside of detachable recess 20. Detachable recess 20 can be provided with discharge opening 22 penetrating therethrough and smoothly discharging high-temperature and high-pressure exhaust gas discharged from valve opening mechanism 14a of battery cell 1 to the outside. Discharge opening 22 is provided at a position where the discharge material such as exhaust gas can be smoothly discharged to the outside. For example, as indicated by solid lines in Figs. 7 and 8, discharge opening 22 can be provided at a root of holding wall 24. This battery holder 2 has a feature that the discharge material can be discharged to the outside from discharge openings 22 of a plurality of holding walls 24, and fitting claws 21 having holding strength can stably hold and dispose battery cell 1 at a fixed position. As indicated by dotted lines in Figs. 7 and 8, discharge opening 22 can be provided at a root of fitting claw 21 of battery holder 2. This battery holder 2 can discharge the discharge material to the outside from a position and angle different from those of holding wall 24, and can smoothly discharge the discharge material to the outside by increasing the number of openings or enlarging the opening area. Battery holder 2 having discharge opening 22 is linearly arranged, for example, as illustrated in Fig. 7, and can discharge exhaust gas to both sides. Exhaust gas discharged from discharge opening 22 can be discharged to the outside of exterior case 6 by providing discharge ducts (not illustrated) on both sides of battery holder 2. In addition, battery holder 2 can be shaped to guide the discharge material to discharge opening 22 in detachable recess 20, and can be provided with a rib or the like.

### (Spring contact 3, first spring contact 31, second spring contact 32)

Spring contact 3 is connected to electrode 12 of battery cell 1 disposed at a fixed position in battery holder 2. Spring contact 3 of Fig. 3 includes first spring contact 31 and second spring contact 32. First spring contact 31 and second spring contact 32 are disposed at fixed positions of battery holder 2, and are electrically connected to positive and negative electrodes 12 of battery cell 1 guided to detachable recess 20. First spring contact 31 and second spring contact 32 are disposed at fixed positions of battery holder 2, and elastically press and electrically connect electrodes 12 (first electrode 12a, second electrode 12b) of battery cell 1. First spring contact 31 includes first mount portion 31a mounted on battery holder 2 (bottom plate 23), and leaf spring-shaped first contact portion 31b bent from first mount portion 31a into a shape imparting elasticity and spring property and coupled to first mount portion 31a. First spring contact 31 electrically connects first contact portion 31b to end-face electrode 13a (first electrode 12a) of battery cell 1 by bringing first contact portion 31b into contact with end-face electrode 13a while first contact portion 31b elastically presses end-face electrode 13a. Second spring contact 32 includes second mount portion 32a mounted on battery holder 2 (bottom plate 23), and a plurality of leaf spring-shaped second contact portions 32b bent from second mount portion 32a into a shape imparting elasticity and spring property and coupled to second mount portion 32a. Second spring contact 32 electrically connects the plurality of second contact portions 32b to front-face electrode 13b (second electrode 12b) of metal cylinder 15 of battery cell 1 by bringing the plurality of second contact portions 32b into contact with front-face electrode 13b while the plurality of second contact portions 32b elastically press front-face electrode 13b in the central direction (inward direction) from the periphery. Spring contact 3 can be formed by an elastically deformable conductive metal plate. Spring contact 3 can include first contact portion 31b and second contact portion 32b that are elastically pressed against electrode 12 of battery cell 1 by an elastic restoring force of a leaf spring shape that is bent into a shape imparting elasticity and spring property and coupled, for example. The elastic restoring force of spring contact 3 can elastically press first contact portion 31b of first spring contact 31 against first electrode 12a and second contact portion 32b of second spring contact 32 against second electrode 12b.

Figs. 3 to 9 exemplify battery holder 2 in which both first spring contact 31 and second spring contact 32 are disposed at a fixed position. In first spring contact 31 in Figs. 3 to 6, first mount portion 31a is installed and fixed on an inner surface of bottom plate 23 of battery holder 2, and first contact portion 31b is disposed so as to pass through hole 25a of bottom plate 23 and face end-face electrode 13a of battery cell 1. In second spring contact 32 of Figs. 3 to 6, second mount portion 32a is installed and fixed on an outer surface of bottom plate 23 of battery holder 2, and a plurality of second contact portions 32b are disposed on an inner surface of holding wall 24 so as to pass through holes 25b of bottom plate 23 and face front-face electrode 13b of battery cell 1. First spring contact 31 and second spring contact 32 are pressed against and electrically connected to electrode 12 of battery cell 1 inserted into detachable recess 20. First spring contact 31 includes first connection terminal 31c that is coupled to first mount portion 31a, penetrates bottom plate 23, and is exposed to the outer surface of battery holder 2 that is the outer surface of bottom plate 23 (Figs. 4, 6), and second spring contact 32 includes second connection terminal 32c that is coupled to second mount portion 32a, and is exposed to the outer surface of battery holder 2 (Fig. 4).

First spring contact 31 and second spring contact 32 can be electrically connected to battery cell 1 in a stable manner with a small contact resistance by increasing the contact pressure at which first contact portion 31b and second contact portion 32b both having a leaf spring shape press the surface of electrode 12 of battery cell 1. First spring contact 31 can reduce the contact resistance between first contact portion 31b and end-face electrode 13a by increasing the contact pressure at which first contact portion 31b presses end-face electrode 13a, but the contact pressure is an extrusion force that extrudes battery cell 1 from detachable recess 20. The extrusion force acts in a direction in which battery cell 1 is extruded from detachable recess 20, and causes positional displacement of battery cell 1. Positional displacement of battery cell 1 is a factor that hinders electrical connection between electrode 12 of battery cell 1 and spring contact 3, but battery holder 2 is provided with fitting claw 21 that prevents positional displacement of battery cell 1. Fitting claw 21 is guided by outer peripheral groove 16 of battery cell 1 to prevent positional displacement of battery cell 1 in the extrusion direction. Therefore, battery holder 2 in which fitting claw 21 is provided in an integrated structure has a feature that battery cell 1 can be disposed at a fixed position while the contact pressure of end-face electrode 13a of first contact portion 31b is increased and the contact resistance is kept small.

Since a plurality of second contact portions 32b of second spring contact 32 are disposed inside opposing holding walls 24, the contact pressure between second contact portion 32b and front-face electrode 13b is increased, so that battery cell 1 can be disposed at a fixed position while positional displacement of battery cell 1 is suppressed. This is because second contact portions 32b disposed at opposite positions can press front-face electrode 13b of battery cell 1 in the opposite direction (inward direction) to clamp battery cell 1 while offsetting contact pressure. Second contact portion 32b of second spring contact 32 has a feature that contact resistance can be reduced by increasing the contact pressure for pressing front-face electrode 13b, and further, a frictional resistance with the surface of battery cell 1 can be increased to suppress positional displacement of battery cell 1.

In first spring contact 31 and second spring contact 32, first contact portion 31b and second contact portion 32b are disposed at positions of electrode 12 of battery cell 1 inserted into detachable recess 20. In Fig. 5, in a state where first end face 1a of battery cell 1 is inserted into detachable recess 20, second contact portion 32b of second spring contact 32 extends below outer peripheral groove 16, and is in contact with front-face electrode 13b. This second spring contact 32 can bring second contact portion 32b into contact with front-face electrode 13b with a wide contact area without being restricted by the arrangement of outer peripheral groove 16. Second spring contact 32 can press the side surface of battery cell 1 at a position separated from first end face 1a by leaf spring-shaped second contact portion 32b extending below outer peripheral groove 16, and can stably dispose and hold battery cell 1 at a fixed position.

The plurality of second spring contacts 32 are disposed such that a pair of second spring contacts 32 are at opposite positions, and a plurality of pairs of the second spring contacts 32 are evenly disposed, whereby battery cell 1 can be stably clamped. Even when battery cell 1 (power supply unit 100) is vibrated, the contact pressure between spring contact 3 and electrode 12 is stable, and as a result, the contact resistance can be stably suppressed to a small value. In Fig. 3, a plurality of second spring contacts 32 include a total of four second spring contacts 32; two pairs of second spring contacts 32 facing each other, and the contacts are disposed at intervals of a central angle of 90 degrees. Although the number of second spring contacts 32 can be increased to increase the number of contacts, if there are too many second spring contacts 32, the contact width cannot be secured, and the arrangement relationship with fitting claw 21 may be restricted. Therefore, for example, it is preferable that a total of four second spring contacts 32, that is, two pairs of second spring contacts 32 facing each other are disposed at intervals of a central angle of 90 degrees. In Fig. 3, a total of four second spring contacts 32; two pairs of second spring contacts 32 are disposed at four corners of bottom plate 23. The pair of second spring contacts 32 disposed at opposite positions can be pressed against each other in the push-back direction (inward direction) for clamping, a plurality of sets (two sets) of the pair of opposing second spring contacts 32 can be pressed to clamp along a plurality of axes (two axes), and the pair of opposing second spring contacts 32 can be disposed diagonally and pressed to clamp by disposing second spring contacts 32 at intervals of a central angle of 90 degrees, and battery cell 1 can be stably clamped. In addition, second spring contact 32 can secure a contact width, and fitting claw 21 can be disposed between second spring contacts 32.

First spring contact 31 and second spring contact 32 can be connected to connection lead 18 to connect adjacent battery cells 1 in series or/and in parallel. First spring contact 31 and second spring contact 32 illustrated in Fig. 7 connect adjacent battery cells 1 in parallel via connection lead 18. In this drawing, spring contacts 3 disposed on inner surfaces of three adjacently disposed battery holders 2 are coupled by connection lead 18 to connect battery cells 1 in parallel. First mount portion 31a of first spring contact 31 and second mount portion 32a of second spring contact 32 are provided on different surfaces across bottom plate 23 of battery holder 2 to ensure insulation between first spring contact 31 and second spring contact 32. First spring contact 31 disposed on the surface of bottom plate 23 of each battery holder 2 is connected by connection lead 18 made of one metal plate, and second spring contact 32 disposed on the inner surface of holding wall 24 of each battery holder 2 is connected by connection lead 18 made of one metal plate. First spring contact 31 and connection lead 18 are both formed by one metal plate, and second spring contact 32 and connection lead 18 are also both formed by one metal plate. One metal plate coupling first spring contact 31 and connection lead 18 and one metal plate coupling second spring contact 32 and connection lead 18 can be disposed at a fixed position of battery holder 2 to couple adjacent battery holders 2.

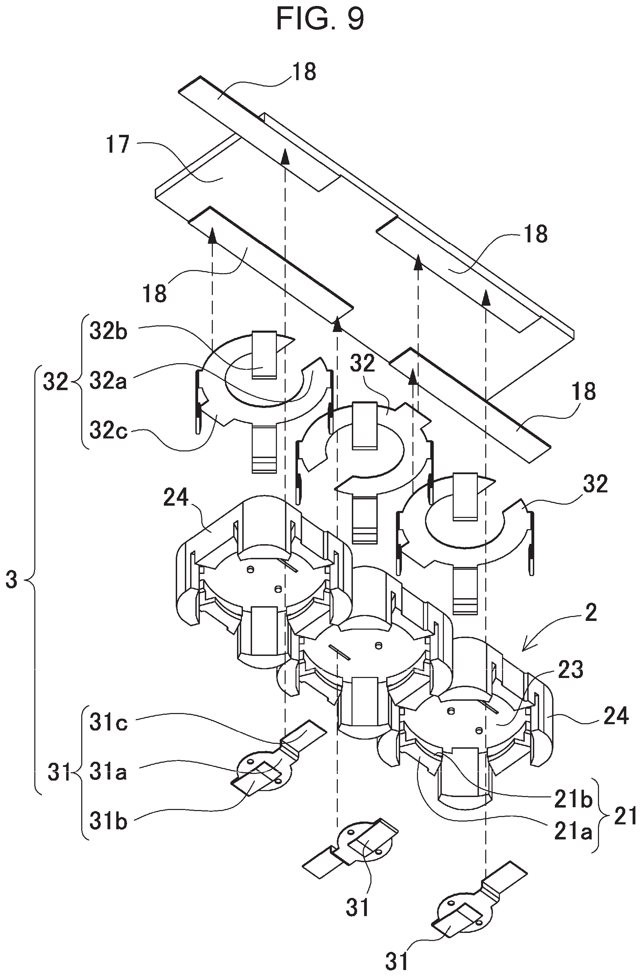

Figs. 8 and 9 are exploded perspective views of battery holder 2 forming assembled battery 10 including three battery cells 1, first spring contact 31, second spring contact 32, and holder cover 17. Holder cover 17 illustrated in these drawings has metal plate connection leads 18 fixed to both sides of the surface. Connection leads 18 disposed on both sides of holder cover 17 are connected to first connection terminal 31c and second connection terminal 32c of first spring contact 31 and second spring contact 32 provided in each battery holder 2. Holder cover 17 has a surface to which connection lead 18 is fixed, disposed in an orientation facing bottom plate 23 of battery holder 2, and brought into contact with first connection terminal 31c and second connection terminal 32c protruding from battery holder 2. Connection lead 18 of holder cover 17 in Fig. 8 connects first spring contact 31 and second spring contact 32 in parallel to connect battery cells 1 in parallel. In holder cover 17 of Fig. 9, first spring contact 31 and second spring contact 32 of adjacent battery holders 2 are connected in series by connection lead 18, and battery cells 1 are connected in series.

First spring contact 31 and second spring contact 32 are connected to connect battery cells 1 in parallel or/and in series. In battery holder 2, first spring contact 31 and second spring contact 32 are disposed on both sides of a bottom surface of bottom plate 23.

In Fig. 9, first connection terminals 31c of first spring contacts 31 and second connection terminals 32c of second spring contacts 32 of adjacent battery holders 2 are disposed alternately. In holder cover 17, connection leads 18 for connecting adjacent second connection terminals 32c in series are disposed along both side edges. Connection lead 18 disposed on a side edge of holder cover 17 connects second connection terminals 32c of adjacent battery holders 2 to connect battery cells 1 in series.

As illustrated in Figs. 8 and 9, in assembled battery 10 in which holder cover 17 is disposed to face bottom plate 23 of battery holder 2, battery cells 1 can be connected in parallel or in series by changing connection lead 18 of holder cover 17. As illustrated in Fig. 1, in battery block 11, an output terminal is provided in each of the assembled batteries 10, and the assembled batteries 10 can be connected in series or/and in parallel by connection lead 18 connected to the output terminals. Connection lead 18 for connecting adjacent assembled batteries 10 in series or in parallel can be provided on circuit board 7. In addition, connection lead 18 may be provided outside circuit board 7 to connect adjacent assembled batteries 10 in series or in parallel.

In power supply unit 100 of Fig. 1, since the bottom surfaces of metal cylinders 15 of battery cells 1 disposed in parallel are disposed on the same plane, the cooling plate can be disposed on the bottom surface of metal cylinder 15 in a thermally coupled state. Power supply unit 100 having this structure has a feature of being capable of uniformly and efficiently dissipating heat from each battery cell 1 by the cooling plate.

Furthermore, as illustrated in the cross-sectional schematic view of Fig.10, power supply unit 100 can be provided with sub battery holder 26 in which second end face 1b (bottom portion of metal cylinder 15 of battery cell 1 in drawing) opposite to end-face electrode 13a of battery cell 1 is inserted to dispose the second end face 1b side of battery cell 1 at a fixed position. Sub battery holder 26 is provided with sub detachable recess 27 into which a bottom portion of metal cylinder 15 is detachably inserted. In each battery cell 1, one end (first end face 1a) on the end-face electrode 13a side is inserted into detachable recess 20 of battery holder 2, the other end (second end face 1b) on the opposite side of end-face electrode 13a is inserted into sub detachable recess 27, and battery cell 1 can be disposed at a fixed position by being clamped and sandwiched between both battery holder 2 and sub battery holder 26. Sub battery holder 26 can be disposed on an inner surface of exterior case 6, and a bottom portion of metal cylinder 15 can be disposed at a fixed position.

A plurality of battery cells 1 are electrically connected to spring contact 3 via connection lead 18. Spring contact 3 is connected to connection lead 18 illustrated in the exploded perspective views of Figs. 8 and 9. Connection lead 18 is connected to a connection terminal (first connection terminal 31c, second connection terminal 32c) of spring contact 3 to connect the plurality of battery cells 1 in series or in parallel. Connection leads 18 in Figs. 8 and 9 are fixed to a surface of holder cover 17 disposed on an outer surface of bottom plate 23 of battery holder 2. Holder cover 17 is disposed on an outer surface of bottom plate 23 of battery holder 2, and connects battery cells 1 in series or in parallel.

In power supply unit 100 of Fig. 1, circuit board 7 is disposed on a surface of holder cover 17. Circuit board 7 is mounted with a protection circuit (not illustrated) that controls charge and discharge of battery cell 1. The protection circuit is connected to a temperature sensor or the like that detects the voltage or current of battery cell 1 and the temperature of battery cell 1, and controls charge and discharge of battery cell 1 to hold power supply unit 100 in a safe use state. Circuit board 7 is connected to battery cell 1 via connection lead 18 and spring contact 3, and can detect a voltage and a current of battery cell 1.

### INDUSTRIAL APPLICABILITY

The power supply unit of the present disclosure can be effectively used as a power supply unit having a reusable structure in which a non-standard battery cell can be easily removed and replaced.

### REFERENCE MARKS IN THE DRAWINGS

- 100: power supply unit
- 1: battery cell
- 1a: first end face
- 1b: second end face
- 1A: cylindrical battery
- 2: battery holder
- 3: spring contact
- 6: exterior case
- 6A: lower case
- 6B: upper lid
- 7: circuit board
- 10: assembled battery
- 11: battery block
- 12: electrode
- 12a: first electrode
- 12b: second electrode
- 13a: end-face electrode
- 13b: front-face electrode
- 14: sealing plate
- 14a: valve opening mechanism
- 15: metal cylinder
- 16: outer peripheral groove
- 17: holder cover
- 18: connection lead
- 20: detachable recess
- 21: fitting claw
- 21a: elastic arm
- 21b: locking protrusion
- 22: discharge opening
- 23: bottom plate
- 24: holding wall
- 25a: hole
- 25b: hole
- 26: sub battery holder
- 27: sub detachable recess
- 31: first spring contact
- 31a: first mount portion
- 31b: first contact portion
- 31c: first connection terminal
- 32: second spring contact
- 32a: second mount portion
- 32b: second contact portion
- 32c: second connection terminal

## Claims

1. A power supply unit for replaceable battery cells, the power supply unit comprising:
a plurality of battery cells each including an outer peripheral groove on one end side;
a battery holder, made of an insulating material, to position a battery cell at a fixed position, the battery cell being one of the plurality of battery cells; and
a spring contact elastically pressed against and electrically connected to positive and negative electrodes of the battery cell, wherein:
in the positive and negative electrodes of the battery cell,
one of the positive and negative electrodes is a first electrode, and another of the positive and negative electrodes is a second electrode, and
the first electrode is an end-face electrode provided on an end face of the battery cell;
the spring contact includes
a first spring contact electrically connected to the end-face electrode that is the first electrode of the battery cell, and
a second spring contact electrically connected to the second electrode of the battery cell;
the battery holder includes
a detachable recess into which an end of the battery cell is removably inserted, and
a fitting claw that engages with the outer peripheral groove of the battery cell, which is guided by the detachable recess, to removably lock the battery cell;
the first spring contact is
disposed in a central portion of a bottom surface of the detachable recess, and
electrically connected to the end-face electrode that is the first electrode of the battery cell that is inserted into the detachable recess; and,
in the battery holder,
the fitting claw is engaged with the outer peripheral groove of the battery cell, and
the battery cell is removably disposed at a fixed position in the detachable recess.

2. The power supply unit according to Claim 1, wherein the second spring contact elastically protrudes on an inner surface of the detachable recess, and is elastically pressed against and electrically connected to the second electrode.

3. The power supply unit according to Claim 1, wherein the fitting claw of the battery holder is elastically deformed to removably lock the battery cell in the detachable recess.

4. The power supply unit according to Claim 1, further comprising:
an exterior case that houses the plurality of battery cells,
wherein:
the exterior case contains a battery block including the plurality of battery cells ;
the battery block includes a plurality of assembled batteries; and
each of the plurality of assembled batteries is configured by coupling the plurality of battery cells in an integrated structure.

5. The power supply unit according to Claim 1, wherein each of the plurality of battery cells is a cylindrical battery.

6. The power supply unit according to Claim 4, wherein:
each of the plurality of assembled batteries includes a holder cover, on a surface of which a plurality of battery holders are arranged and coupled with each other, the battery holder being one of the plurality battery holders;
the holder cover includes a connection lead on the surface; and
the connection lead
is connected to the spring contact coupled to the plurality of battery holders adjacently arranged, and
connects the plurality of battery cells adjacently arranged at least in series or in parallel.

7. The power supply unit according to Claim 1, further comprising:
a sub battery holder into which respective ends of adjacent battery cells of the plurality of battery cells are inserted, to position the adjacent battery cells at fixed positions, the battery cell being one of the adjacent battery cells,
wherein:
the sub battery holder includes a sub detachable recess into which one end of the battery cell is detachably inserted;
another end of the battery cell is inserted into the detachable recess;
the one end of the battery cell is inserted into the sub detachable recess; and
the adjacent battery cells are arranged in parallel at fixed positions.

8. The power supply unit according to Claim 1, further comprising:
a circuit board mounted with a protection circuit electrically connected via the first spring contact and the second spring contact to the first electrode and the second electrode of the battery cell.

9. The power supply unit according to any one of Claims 1 to 8, wherein:
the battery cell includes a valve opening mechanism that opens a valve and ejects a discharge material when an internal pressure exceeds a set pressure; and
the battery holder includes a discharge opening that communicates with inside and outside of the detachable recess, and allows the discharge material ejected from the valve opening mechanism to pass through the discharge opening.

10. A power supply unit comprising:
a plurality of battery cells; and
a battery holder, made of an insulating material, to position a battery cell at a fixed position, the battery cell being one of the plurality of battery cells,
wherein:
the battery cell includes
a first electrode provided on an end face of the battery cell,
a second electrode, and
an outer peripheral groove recessed toward a center along an outer periphery near one end of the battery cell;
the battery holder includes
a first spring contact disposed at a central portion of a bottom surface of the detachable recess,
a second spring contact,
a detachable recess into which the one end of the battery cell is inserted, and
a fitting claw facing the outer peripheral groove;
the first spring contact is elastically pressed against and electrically connected to the first electrode;
a second spring contact is elastically pressed against and electrically connected to the second electrode; and
the fitting claw is deformed toward an outside of the battery holder and is guided into and locked to the outer peripheral groove.

11. The power supply unit according to Claim 10, wherein the second spring contact protrudes on an inner surface of the detachable recess, and is elastically pressed against and electrically connected to the second electrode.

12. The power supply unit according to Claim 10, wherein the fitting claw elastically deforms to be locked to the outer peripheral groove.

13. The power supply unit according to Claim 10, further comprising:
an exterior case,
wherein:
the exterior case contains a battery block ;
the battery block includes a plurality of assembled batteries that are assembled via respective battery holders; and
each of the plurality of assembled batteries includes the plurality of battery cells coupled in an integrated structure.

14. The power supply unit according to Claim 10, wherein the battery cell is a cylindrical battery.

15. The power supply unit according to Claim 13, further comprising:
a holder cover that is coupled to the plurality of battery cells via the plurality of battery holders,
wherein:
the holder cover includes a connection lead on a surface of the holder cover;
the connection lead is connected to the first spring contact or the second spring contact disposed adjacent to each other; and
adjacent battery cells of the plurality of battery cells are connected at least in series or in parallel.
